# EUROPÄISCHE PATENTSCHRIFT

(11) **EP 1 038 335 B1**
(45) Veröffentlichungstag und Bekanntmachung des Hinweises auf die Patenterteilung: **10.10.2007**
(21) Anmeldenummer: 99927644.7
(22) Anmeldetag: 13.07.1999
(51) Int. Cl.: H01R 9/24, H01R 4/24, H04Q 1/14

(54) **KONTAKTFEDERSATZ FÜR MEHRFACH-VERBINDUNGSLEISTE FÜR KABELANSCHLÜSSE, SOWIE MEHRFACH-VERBINDUNGSLEISTE**
SET OF CONTACT BLADES IN A MULTIPLE CONNECTOR STRIP FOR CABLE CONNECTORS, AND MULTIPLE CONNECTOR STRIP
ENSEMBLE DE LAMES DE CONTACT DESTINE A UNE BARRETTE DE CONNEXION MULTIPLE POUR DES RACCORDS DE CABLES, ET BARRETTE DE CONNEXION MULTIPLE

(30) Priorität: 16.07.1998 CH 151198; 16.07.1998 CH 151298
(43) Veröffentlichungstag der Anmeldung: 27.09.2000
(73) Patentinhaber: Reichle & De-Massari AG, 8620 Wetzikon (CH)
(72) Erfinder: REICHLE, Hans, CH-8620 Wetzikon (CH)
(74) Vertreter: Liebetanz, Michael
(86) Internationale Anmeldenummer: PCT/CH1999/000318
(87) Internationale Veröffentlichungsnummer: WO 2000/004607

(56) Entgegenhaltungen:
- EP-A- 0 370 380
- EP-A- 0 643 440
- EP-A- 0 645 938
- EP-A- 0 765 011
- EP-A- 0 793 303
- WO-A-92/08255
- DE-A- 19 629 643
- US-A- 3 611 264
- US-A- 5 624 267

## Beschreibung

Die vorliegende Erfindung betrifft eine Mehrfach-Verbindungsleiste für Kabelanschlüsse, insbesondere eines Verteilers von Fernsprech- und Datenleitungen, mit Kontaktfedersätzen zur einsetzbaren Aufnahme in längsseitig beabstandeten offenen Kammern.

Die EP-A-0 643 440 beschreibt einerseits einen elektrischen Verbinder und andererseits eine Mehrfach-Verbindungsleiste aus einem einstückigen Kunststoffkörper mit den Merkmalen des Oberbegriffs des Anspruchs 1. Letztere hat offene Kammern zur einsetzbaren Aufnahme je eines Kontaktfedersatzes mit seitlichen Führungsnuten, wobei es sich bei diesen Führungsnuten im wesentlichen um eine V-förmige Nut für eine der Zungen und eine auf der dortigen Querachse liegende Nut für die andere Zunge handelt, wobei das Ziel der EP-A-0 643 440 die Verbesserung der Steifigkeit der Kontakte bei schmalem Platzbedarf für jeden Kontaktfedersatz ist.

Die US-A-5,772,472 zeigt eine weitere einstückige Mehrfach-Verbindungsleiste aus einem einstückigen Kunststoffkörper mit durchgehenden offenen Kammern zur einsetzbaren Aufnahme von durchgehenden Kontaktfedersätzen.

Die WO 92/08255 A zeigt eine Mehrfach-Verbindungsleiste mit einem mehrstückigen Kunststoffkörper. Ein hierfür vorgesehener Kontaktfedersatz wurde so ausgelegt, um ihn bei der Herstellung fertiger Verbindungsleisten in offene Gehäuseteile der Leiste einzulegen, wonach der Gehäuse durch weitere Teile vervollständigt wurde.

Für eine einsetzbare Aufnahme in längsseitig beabstandete offene Kammern einer Mehrfach-Verbindungsleiste, die somit eine Bestückung von einer Seite von aussen verlangt, sind die bekannten Kontaktfedersätze wegen deren ungeeigneten Konfigurationen unbrauchbar.

Es ist deshalb Aufgabe der Erfindung, eine Mehrfach-Verbindungsleiste mit Kontaktfedersätzen zu schaffen, die eine Bestückung von einer Seite von aussen her in sicherer Weise gestattet.

Diese Aufgabe wird erfindungsgemäss mit einer Mehrfach-Verbindungsleiste mit den Merkmalen des Anspruchs 1 gelöst.

Vorzugsweise ist der Steg von geringerer Breite und aufbrechbar.

Dies erlaubt, dass der Kontaktfedersatz ein durch Aufbrechen des Steges in einen Trennkontakt oder, durch Einscheiben eines Isolierstückes oder Verformung in einen Schaltkontakt umbildbarer Durchgangskontakt ist.

Um bei in eine solche Mehrfach-Verbindungsleiste einzusetzenden Kontaktfedersätzen die hochempfindlichen Kontaktstellen vor Verschmutzung und/oder Beschädigung bei Manipulationen, wie Prüfen, Trennen u.a. zu schützen, ist erfindungsgemäss vorgesehen, die Kontaktstellen seitlich schräg zu stellen, derart, dass bei Einführung eines Steckers nur die Kanten der Kontaktstellen berührt werden.

Ein Kontaktfedersatz gemäss dieser Erfindung erlaubt nun eine Bestückung einer Verbindungsleiste von einer Seite von aussen her. Dies wiederum führt zum weiteren Ziel, eine entsprechende Verbindungsleiste zu schaffen, die dann nur mit einer einzigen Ausführungsform eines Kontaktfedersatzes bestückt werden kann, um trotzdem als Durchgangsleiste, oder Trennleiste oder Schaltleiste Verwendung zu finden.

Eine solche Mehrfach-Verbindungsleiste mit längsseitig beabstandeten offenen Kammern zur einsetzbaren Aufnahme je eines Kontaktfedersatzes, für Kabelanschlüsse, insbesondere eines Verteilers von Fernsprech- und Datenleitungen, zeichnet sich zunächst dadurch aus, dass deren Gehäuse nunmehr aus einem einstückigen Kunststoffkörper besteht. Die Kammern weisen dann seitliche Führungsnuten auf zur einschiebbaren formschlüssigen Aufnahme der Längskanten von mindestens zwei beabstandeten Zungen am Kontaktfedersatz, wobei die Zungen Kontaktfedern tragen und am freien Ende Drahtanschlussmittel, vorzugsweise Schneidklemmen aufweisen sowie am inneren Ende durch einen Steg verbunden sind und wobei sich mindestens die Drahtanschlussmittel, die Kontaktfedern und der Steg in Bestückungsrichtung hintereinander, wenigstens angenähert fluchtend, zwischen den Längskanten der Zungen befinden.

Die Universalität der erfindungsgemässen Verbindungsleiste wird dann dadurch erhöht, dass die Kammern im Bereich des am inneren Ende die Zungen eines Kontaktsatzes verbindenden, vorzugsweise aufbrechbaren Steges eine Öffnung zur temporären Aufnahme eines Aufbrechwerkzeuges aufweisen.

Weiter ist es von Vorteil, wenn die Kammern im Bereich der Kontaktstellen eines Kontaktsatzes Führungsmittel zur Einbringung eines Isolier-Trennstückes aufweisen.

Hierbei kann die Verbindungsleiste eine Durchgangsleiste oder eine Trennleiste oder eine Schaltleiste sein, indem die Kontaktfedersätze durch Aufbrechen des Steges in Trennkontakte oder, durch Einschieben eines Isolier-Trennstückes oder Verformung, in Schaltkontakte umbildbare Durchgangskontakte sind.

Durch diese Massnahmen ist es nunmehr möglich, die Bestückung der einteiligen Verteilerleisten frontseitig mit einheitlichen Kontaktfedersätzen vorzunehmen, welche Verteilerleisten dann, je nach Bestimmung, als Anschlussleisten belassen oder durch Aufbrechen der Stege in Trennleisten oder durch Einschieben eines Isolierstückes oder Verformung eines Kontaktes in Schaltleisten umgebildet werden können.

Damit wird eine ausserordentlich kostengünstige Herstellung und Lagerhaltung erreicht.

Beispielsweise Ausführungsformen des Erfindungsgegenstandes sind nachfolgend anhand der Zeichnung näher erläutert. Es zeigen:
Fig 1 in schaubildartiger Darstellung eine einstückige Mehrfach-Verbindungsleiste mit vorgesetztem Kontaktfedersatz in Bestückungsrichtung;
Fig 2 ausschnittweise in schaubildartiger Darstellung die Mehrfach-Verbindungsleiste gemäss Fig. 1 in grösserem Masstab, mit eingesetztem Kontaktfedersatz;
Fig 3 in schaubildartiger Darstellung einen erfindungsgemässen Kontaktfedersatz;
Fig. 4 bis 6 in Seitenansicht den Kontaktfedersatz gemäss Fig. 3 als Durchgangskontakt, Trennkontakt resp. Schaltkontakt; und
Fig. 7 u. 8 in Draufsicht in grösserem Masstab die Kontaktstelle des Kontaktfedersatzes gemäss Fig. 3 in unterschiedlicher Funktionsweise.

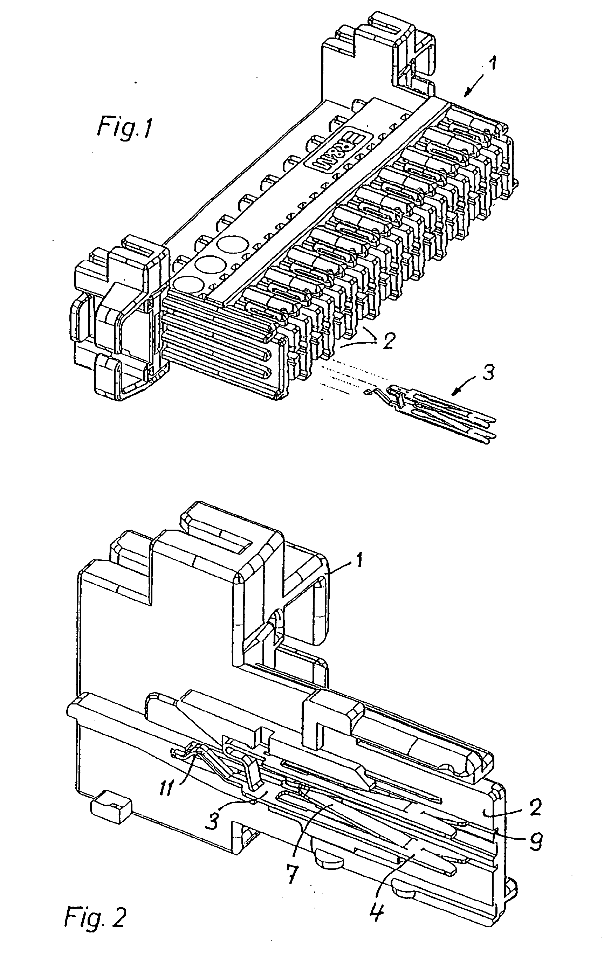

Die erfindungsgemässe Mehrfach-Verbindungsleiste gemäss Fig. 1 und 2 ist bestimmt für Kabelanschlüsse, insbesondere eines Verteilers von Fernsprech- und Datenleitungen, mit einem Gehäuse 1 aus Kunststoff, in dem sich, längsseitig beabstandet, eine Mehrzahl Kontaktfedersätze 3 befinden.

Erfindungsgemäss ist das Kunststoff-Gehäuse 1 einstückig ausgebildet und umfasst eine Mehrzahl längsseitig beabstandete offene Kammern 2 zur einsetzbaren Aufnahme jeweils eines Kontaktfedersatzes 3.

Die Kammern 2 weisen hierbei seitliche, hier parallele Führungsnuten 9 auf (Fig. 2) zur einschiebbaren formschlüssigen Aufnahme der Längskanten von mindestens zwei beabstandeten, hier parallelen Zungen 4 am Kontaktfedersatz 3.

Ferner weisen die Kammern 2 im Bereich eines am inneren Ende die Zungen 4 eines Kontaktsatzes 3 verbindenden, aufbrechbaren Steges 6 eine Öffnung auf zur temporären Aufnahme eines Aufbrechwerkzeuges (nicht gezeigt).

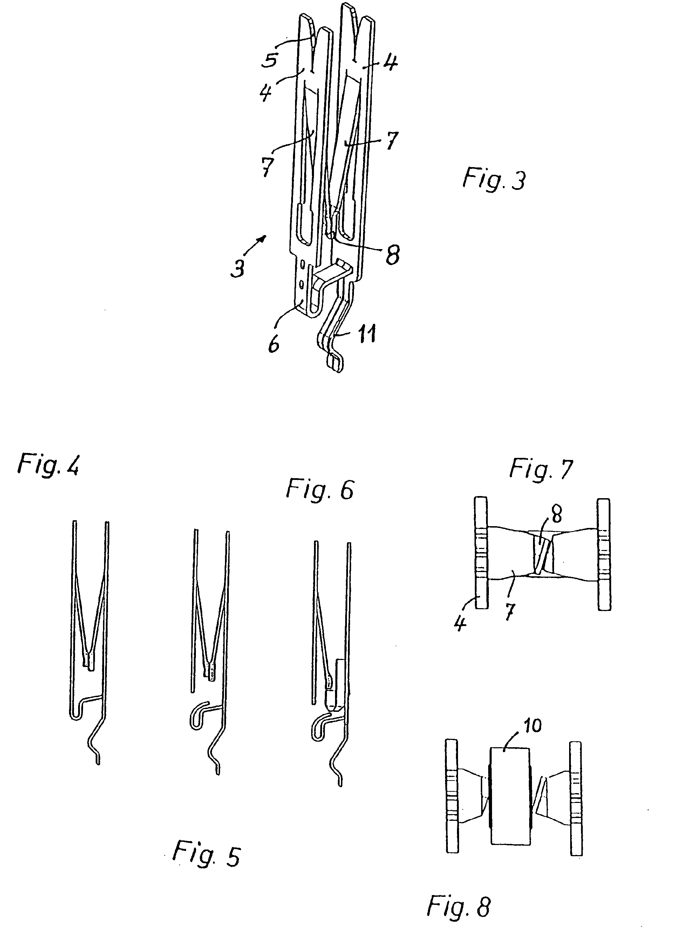

Weiter weisen die Kammern 2 im Bereich der Kontaktstellen 8 eines Kontaktsatzes 3 Führungsmittel (nicht gezeigt) zur Einbringung eines Isolier-Trennstückes (Fig. 6) auf.

Um einen Kontaktfedersatz in eine solche Kammer 2 ausgerichtet und verdrehfest einsetzen zu können, umfasst jeder Kontaktfedersatz 3 gemäss Fig. 3 erfindungsgemäss mindestens zwei beabstandete, hier parallele Zungen 4, mit Kontaktstellen 8 aufweisenden Kontaktfedern 7, wobei die Längskanten der Zungen zum einschiebbaren formschlüssigen Eingreifen in Führungsnuten 9 einer der Kammern 2 der Mehrfach-Verbindungsleiste 1 (Fig.2) bestimmt sind.

Die Zungen 4 des Kontaktfedersatzes 3 weisen zudem am freien Ende Drahtanschlussmittel, insbesondere Schneidklemmen 5 auf und sind am inneren Ende durch mindestens einen vorzugsweise aufbrechbaren Steg 6 geringerer Breite verbunden.

Hierbei befinden sich mindestens die Drahtanschlussmittel 5, die Kontaktfedern 7 und der Steg 6 in Bestückungsrichtung hintereinander, annähernd fluchtend, zwischen den zum formschlüssigen Eingreifen bestimmten Längskanten der Zungen 4.

Gemäss den Fig. 4,5 u. 6 ist der Kontaktfedersatz ein durch Aufbrechen des Steges in einen Trennkontakt oder, durch Einschieben eines Isolierstückes oder Kontakt-Verformung, in einen Schaltkontakt umbildbarer Durchgangskontakt.

Durch diese Massnahmen ist es nunmehr möglich, die Bestückung der einteiligen resp. einstückigen Verteilerleisten frontseitig mit einheitlichen Kontaktfedersätzen vorzunehmen, welche Verteilerleisten dann, je nach Bestimmung, als Anschluss- resp. Durchgangsleiste oder Trennleiste oder Schaltleiste umbildbar sind, indem die Kontaktfedersätze durch Aufbrechen des Steges in Trennkontakte oder, durch Einschieben eines Isolier-Trennstückes oder Verformung, in Schaltkontakte umbildbare Durchgangskontakte sind.

Um bei solchen Kontakfedersätzen die hochempfindlichen Kontaktstellen 8 vor Verschmutzung und/oder Beschädigung bei Manipulationen, wie Prüfen, Trennen u.a. zu schützen, kann gemäss Fig. 7 u. 8 weiter vorgesehen sein, die Kontaktstellen 8 seitlich schräg zu stellen, sodass bei Einführung eines Steckers 10 (Fig.8) nur die Kanten der Kontaktstellen berührt werden, die eigentliche Kontaktfläche aber unbelastet bleibt. Jeder Kontaktfedersatz 3 kann weiter einen Parallelabgriff 11 aufweisen.

Wird ein Kontaktfedersatz für eine lötfreie Schneid-Klemm-Andrahtung verwendet, der jeweils einen Schneidklemmschlitz sowie eine, hinter dem Schneidklemmschlitz mit vorgegebenem Abstand distanziert angeordnete Schneidkante umfasst, sind entsprechend weitere seitliche Führungsnuten in jeder Kammer vorzusehen, um die Längskanten der Schneidklemmsitz resp. Schneidkante aufweisenden Zungen aufzunehmen.

Es wird Schutz beansprucht wie folgt:

## Patentansprüche

1. Mehrfach-Verbindungsleiste mit längsseitig beabstandeten offenen Kammern (2) und mit in die Kammern (2) eingesetzten Kontaktfedersätzen (3), die jeweils mindestens zwei Zungen (4) aufweisen, für Kabelanschlüsse, insbesondere eines Verteilers von Fernsprech- und Datenleitungen, wobei die Kammern (2) seitliche Führungsnuten (9) zur einschiebbaren formschlüssigen Aufnahme der Längskanten von den Zungen (4) des jeweiligen Kontaktfedersatz (3) umfassen, wobei die zwei Zungen (4) des Kontaktfedersatzes mit Kontaktfedern (7) versehen sind und an ihrem freien Ende Drahtanschlussmittel, vorzugsweise Schneidklemmen (5) aufweisen und an ihrem inneren Ende durch einen Steg (6) verbunden sind, wobei das Gehäuse (1) der Verbindungsleiste aus einem einstückigen Kunststoffkörper besteht, **dadurch gekennzeichnet, dass** die zwei Zungen (4) voneinander beabstandet angeordnet sind und dass sich die Drahtanschlussmittel (5), die Kontaktfedern (7) und der Steg (6) in Bestückungsrichtung hintereinander, wenigstens angenähert fluchtend, zwischen den Längskanten der Zungen (4) befinden.

2. Mehrfach-Verbindungsleiste nach Anspruch 1, **dadurch gekennzeichnet, dass** die Kammern (2) im Bereich von den beabstandeten Zungen (4) zugeordneten Kontaktstellen (8) des Kontaktsatzes (3) zwischen den Führungsnuten (9) Führungsmittel zur Einbringung eines Isolier-Trennstückes aufweisen.

3. Mehrfach-Verbindungsleiste nach Anspruch 1 oder 2, **dadurch gekennzeichnet, dass** der Steg (6) von geringerer Breite und aufbrechbar ist.

4. Mehrfach-Verbindungsleiste nach einem der Ansprüche 1 bis 3, **dadurch gekennzeichnet, dass** diese eine Durchgangsleiste oder eine Trennleiste oder eine Schaltleiste ist, indem die Kontaktfedersätze (3) durch Aufbrechen des Steges (6) in Trennkontakte oder, durch Einschieben eines Isolier-Trennstückes oder Verformung, in Schaltkontakte umbildbare Durchgangskontakte sind.

5. Mehrfach-Verbindungsleiste nach einem der Ansprüche 1 bis 4, **dadurch gekennzeichnet, dass** die Kammern (2) im Bereich eines am inneren Ende die Zungen (4) eines Kontaktsatzes (3) verbindenden, vorzugsweise aufbrechbaren Steges (6) eine Öffnung zur temporären Aufnahme eines Aufbrechwerkzeuges aufweisen.

6. Mehrfach-Verbindungsleiste nach einem der Ansprüche 1 bis 5, **dadurch gekennzeichnet, dass** die Kontaktstellen (8) seitlich schräg gestellt sind, derart, dass bei Einführung eines Steckers dieser nur die Kanten der Kontaktstellen berührt.

## Claims

1. Multiple connection strap with spaced chambers (2) on the longitudinal side and with contact assemblies (3) to be inserted in the chambers (2), each having at least two tongues (4) for cable connections, especially of an exchange for telephone and data connections, wherein the chambers (2) comprise lateral guide grooves (9) for positively connecting insertion of longitudinal edges of the tongues (4) of each contact assembly (3), wherein the two tongues (4) of the contact assembly comprise contact springs (7) and, at their free end, wire connection means, preferably insulation-displacement connections (5), and are connected at their inner end by a web (6), wherein the housing (1) of the connection strap comprises a one-piece plastic housing, **characterized in that** the two tongues (4) are arranged spaced apart one from another and that the wire connecting means (5), the contact springs (7) and the web (6) are arranged one behind the other in an approximately flush manner between the longitudinal edges of the tongues (4).

2. Multiple connection strap according to claim 1, **characterized in that** the chambers (2) comprise guiding means for insertion of an insulating separator in the area of the contact points (8) of the contact assembly (3) associated to the spaced apart tongues (4) between the guide grooves (9).

3. Multiple connection strap according to claim 1 or 2, **characterized in that** the web (6) is of lesser width and can be opened.

4. Multiple connection strap according to one of claims 1 to 3, **characterized in that** the strap is a connecting strap or a separating strap or a switching strap, depending on the situation, if the contact assemblies (3) are connecting contacts transformable into separating contacts by separating the web (6), or into switching contacts by inserting an insulating separator or deformation.

5. Multiple connection strap according to one of claims 1 to 4, **characterized in that** the chambers (2) comprise an opening for temporary accommodating of a separating tool in an area of the web (6) that contacts the tongues (4) of the contact assembly (3) on the inside.

6. Multiple connection strap according to one of claims 1 to 5, **characterized in that** the contact points (8) are laterally inclined such, that when a plug connector is inserted, it only touches the edges of the contact points.

## Revendications

1. Barrette de connexion multiple comprenant des chambres (2) ouvertes et espacées du côté longitudinal, et des ensembles de lames de contact (3) insérés dans les chambres (2), qui présentent à chaque fois au moins deux pattes (4), pour des raccords de câbles, en particulier d'un répartiteur de lignes téléphoniques et de données, les chambres (2) comprenant des rainures de guidage latérales (9) pour recevoir par insertion par engagement positif les arêtes longitudinales des pattes (4) de l'ensemble de lames de contact respectif (3), les deux pattes (4) de l'ensemble de lames de contact étant munies de lames de contact (7) et présentant à leur extrémité libre des moyens de raccord de fil, de préférence des contacts autodénudants (5), et étant connectées à leur extrémité interne par une âme (6), le boîtier (1) de la barrette de connexion étant constitué d'un corps en plastique d'une seule pièce, **caractérisée en ce que** les deux pattes (4) sont disposées de manière espacée l'une de l'autre et **en ce que** les moyens de raccord de fil (5), les lames de contact (7) et l'âme (6) sont situés dans le sens de montage les uns derrière les autres, au moins approximativement en affleurement, entre les arêtes longitudinales des pattes (4).

2. Barrette de connexion multiple selon la revendication 1, **caractérisée en ce que** les chambres (2) dans la région de points de contact (8) de l'ensemble de contact (3) associés aux pattes espacées (4) présentent entre les rainures de guidage (9) des moyens de guidage pour l'incorporation d'une pièce de séparation isolante.

3. Barrette de connexion multiple selon la revendication 1 ou 2, **caractérisée en ce que** l'âme (6) a une plus faible largeur et peut être cassée.

4. Barrette de connexion multiple selon l'une quelconque des revendications 1 à 3, **caractérisée en ce qu'**il s'agit d'une barrette de passage ou d'une barrette de séparation ou d'une barrette de commutation, les ensembles de lames de contact (3) étant des contacts de passage pouvant être convertis en contacts de séparation par rupture de l'âme (6), ou en contact de commutation par insertion d'une pièce de séparation isolante ou par déformation.

5. Barrette de connexion multiple selon l'une quelconque des revendications 1 à 4, **caractérisée en ce que** les chambres (2) présentent, dans la région d'une âme (6) reliant à l'extrémité interne les pattes (4) d'un ensemble de contact (3), de préférence cassable, une ouverture pour recevoir temporairement un outil de cassure.

6. Barrette de connexion multiple selon l'une quelconque des revendications 1 à 5, **caractérisée en ce que** les points de contact (8) sont orientés latéralement en biais de telle sorte que lors de l'insertion d'une fiche, celle-ci ne vienne en contact qu'avec les arêtes des points de contact.
